# FASCICULE DE BREVET EUROPEEN

(11) **EP 2 459 399 B1**
(45) Date de publication et mention de la délivrance du brevet: **06.01.2016**
(21) Numéro de dépôt: 10730774.6
(22) Date de dépôt: 06.07.2010
(51) Int. Cl.: B60C 19/00, B62D 63/06

(54) **VEHICULE COMPORTANT TROIS ESSIEUX NON DIRECTIONNELS**
FAHRZEUG MIT DREI NICHT LENKENDEN ACHSEN
VEHICLE COMPRISING THREE NON STEERING AXLES

(30) Priorité: 29.07.2009 FR 0955307
(43) Date de publication de la demande: 06.06.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: ALBERT, Loïc, F-63100 Clermont-Ferrand (FR); MARLIER, Fabien, F-63000 Clermont-Ferrand (FR); MANSUY, Philippe, F-63118 Cebazat (FR)
(74) Mandataire: Le Cam, Stéphane Georges Elie
(86) Numéro de dépôt international: PCT/EP2010/059606
(87) Numéro de publication internationale: WO 2011/012408

(56) Documents cités:
- EP-A1- 0 686 517
- WO-A1-99/14065
- FR-A- 1 473 029
- JP-A- 10 071 810

## Description

L'invention concerne un véhicule tel qu'un véhicule de transport de type poids lourd, comportant au moins deux essieux, aucun d'entre eux n'étant directionnel et un procédé de répartition de la charge dudit véhicule.

Bien que non limité à ce type d'application, l'invention sera plus particulièrement décrite en référence à un véhicule de type remorque ou semi remorque comportant trois essieux, chacun équipé d'au moins deux pneumatiques.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Un plan circonférentiel est un plan perpendiculaire à l'axe de rotation du pneumatique.

Le plan médian circonférentiel, ou plan équatorial, est un plan perpendiculaire à l'axe de rotation du pneu et qui divise le pneumatique en deux moitiés.

De tels véhicules, destinés généralement à porter de lourdes charges, doivent satisfaire à certaines obligations concernant notamment l'espacement longitudinal entre chacun des essieux. En effet, les différentes réglementations imposent des distances longitudinales entre deux essieux d'une remorque en comportant trois en fonction de la charge admissible par ledit véhicule. L'usage actuelle des remorques comportant trois essieux est habituellement une distance de 1.3 mètre. Par ailleurs, l'état actuel du marché de ces remorques va vers une standardisation de la conception de ces remorques et notamment d'un équipement en pneumatique donné et identique pour l'ensemble des essieux.

L'usage qui est fait de telles remorques comportant trois essieux a un effet notamment sur l'usure des pneumatiques. En effet, lorsque le véhicule suit un parcours en ligne droite, par exemple sur route ou autoroute, l'ensemble des pneumatiques équipant la remorque subit un traitement sensiblement équivalent. Par contre, dès lors que la remorque suit un parcours en courbe, tel que par exemple sur un rond point ou bien lors de manoeuvres, les pneumatiques ne sont plus sollicités de la même façon. Ces différences de sollicitations génèrent une usure très variable des différents pneumatiques équipant la remorque, ce qui rend notamment la gestion des pneumatiques compliquées. Cela nécessite en outre de prévoir des pneumatiques satisfaisant les conditions les plus sévères en usure et donc des pneumatiques comportant une épaisseur suffisante de la bande de roulement. Cela complexifie bien entendu la conception du pneumatique, la masse caoutchouteuse n'étant pas favorable aux performances d'endurance du pneumatique car entraînant des augmentations de la température du pneumatique en roulage.

Tout d'abord, notamment en fonction de la vitesse, le roulage en courbe entraîne des transferts de charge sur les pneumatiques se trouvant sur le côté extérieur de la courbe et donc une usure plus importante de ceux-ci.

D'autre part, les pneumatiques équipant les trois essieux subissent pour certains d'entre eux des phénomènes de ripage sur le sol qui accentue l'usure des pneumatiques concernés par ces phénomènes. Il est en effet connu que trois essieux équipés chacun d'au moins deux pneumatiques équipant le véhicule, l'ensemble des pneumatiques ne peut parvenir à suivre une trajectoire en courbe correspondant au parcours que suit le véhicule. Lorsque l'espacement entre les essieux est homogène, si les pneumatiques équipant l'essieu intermédiaire suivent une trajectoire sensiblement équivalente à celle du véhicule, les pneumatiques équipant les deux autres essieux subissent des phénomènes de ripage sur le sol conduisant à des usures plus importantes.

Il ressort de ces usages que les phénomènes d'usure des pneumatiques équipant un tel véhicule ne sont pas homogènes selon l'emplacement du pneumatique sur la remorque alors que les pneumatiques sont le plus souvent tous les mêmes.

En outre, les évolutions des réseaux routiers, notamment en vue d'améliorer la sécurité des usagers, a conduit à la multiplication des ronds points et donc à une augmentation non négligeable des causes conduisant à des usures différentes de l'ensemble des pneumatiques équipant une remorque.

L'état actuel de ces situations fait que l'usure non homogène des pneumatiques d'une remorque comportant trois essieux devient une gêne pour l'utilisateur qui doit immobiliser son véhicule trop fréquemment pour y remédier soit par permutation des pneumatiques soit par un changement.

Le document EP 0 686 517 décrit un véhicule selon le préambule des revendications 1 à 3 comportant trois essieux dont les axes de rotation sont parallèles entre eux, les pneumatiques d'un essieu présentant une dérive supérieure à celles des pneumatiques d'un autre essieu.

Le document FR 2 903 953 ou bien encore le document EP 1 640 247 proposent des solutions consistant en des essieux auto vireurs par braquage passif ou bien actif des essieux d'une remorque. Ces technologies si elles apportent des solutions au problème du ripage ou bien d'une usure différente selon les pneumatiques sont par contre difficiles à mettre en oeuvre et onéreuses. En outre, ces technologies ne sont opérationnelles du fait de leurs complexités que lors de manoeuvres.

Il existe par ailleurs sur le marché de telles remorques dont un ou plusieurs essieux sont relevables pour éliminer le contact avec le sol des pneumatiques équipant ces essieux. Ces essieux relevables évitent bien entendu l'usure des pneumatiques concernées lorsqu'ils sont en position relevée mais cet état ne peut intervenir que lorsque la charge transportée est en dessous de la charge maximale possible.

Les inventeurs se sont ainsi donnés pour mission d'améliorer l'usure des pneumatiques d'un véhicule comportant au moins deux essieux, aucun d'entre eux n'étant directionnel et plus spécifiquement de réduire l'inhomogénéité de vitesse d'usure entre les différents pneumatiques notamment lors des roulages en courbe ou lors de manoeuvres.

Ce but a été atteint par un véhicule comportant au moins deux essieux équipés d'au moins deux pneumatiques dont les axes de rotation sont en permanence parallèles entre eux d'un essieu à l'autre, et selon l'invention par un véhicule selon les revendications 1 et 2, les pneumatiques d'au moins un essieu présentant une rigidité de dérive supérieure à celle des pneumatiques d'un autre essieu.

Avantageusement lesdits au moins deux essieux ne sont pas des essieux moteurs.

Selon l'invention, les rigidités de dérive des pneumatiques sont définies comme étant la pente sur le tracé d'une courbe exprimant la force exercée par le pneumatique sur le sol en fonction de l'angle de dérive, mesurée pour une pression de 9 bars avec un balayage de charges de 0.6 LI (Load Index) à 1.5 LI appliquée sur le pneumatique.

Les inventeurs ont su mettre en évidence, notamment dans le cas des remorques comportant trois essieux, que la présence de pneumatiques présentant des rigidités de dérive supérieures à celles des pneumatiques équipant les autres essieux permet de limiter l'usure des pneumatiques lors du franchissement de rond points ou bien lors de manoeuvres. Plus précisément, l'usure des pneumatiques équipant les essieux avant et arrière est diminuée.

Les essais réalisés sur un parcours combinant des trajets sur route, en milieu urbain et sur parking de façon à simuler une utilisation standard moyenne ont montré qu'un véhicule selon l'invention permet d'obtenir une vitesse d'usure plus homogène de l'ensemble des pneumatiques du véhicule comparée à la vitesse d'usure des pneumatiques équipant un véhicule semblable pour lequel la rigidité de dérive est identique pour tous les pneumatiques sur l'ensemble des essieux.

Selon l'invention, ledit véhicule comportant trois essieux, la rigidité de dérive des pneumatiques équipant l'essieu intermédiaire est supérieure à celles des pneumatiques équipant les autres essieux, pour limiter au mieux les phénomènes de ripage des pneumatiques équipant les autres essieux.

De préférence encore, la rigidité de dérive des pneumatiques équipant l'essieu intermédiaire est supérieure d'au moins 10 % à celles des pneumatiques équipant les autres essieux.

Selon une première variante de l'invention, ledit véhicule comportant trois essieux, la rigidité de dérive des pneumatiques équipant au moins deux essieux sont identiques.

Selon d'autres variantes de réalisation de l'invention, ledit véhicule comportant trois essieux, la rigidité de dérive des pneumatiques équipant chaque essieu est différente. Selon ce type de variantes de réalisation, le choix des pneumatiques sera fait en fonction des différents paramètres du véhicule tels que la taille, l'espacement entre les essieux, la charge transportée,...

Un premier mode de réalisation de l'invention permettant d'obtenir des pneumatiques avec des rigidités de dérive différentes d'un essieu à l'autre est de conserver des dimensions des pneumatiques identiques sur tous les essieux, les pneumatiques dudit au moins un essieu présentant une rigidité de dérive supérieure à celle des pneumatiques d'un autre essieu présentant une architecture différente. Par exemple, lesdits pneumatiques peuvent présenter des nappes de travail dont les angles formés par les éléments de renforcement avec la direction circonférentielle sont inférieurs à ceux des nappes de travail des pneumatiques équipant les autres essieux.

Au sens de l'invention, les nappes de travail sont des nappes d'éléments de renforcement formant un angle avec la direction circonférentielle, lesdits éléments de renforcement étant croisés d'une nappe à la suivante.

Selon un deuxième mode de réalisation de l'invention, au moins un essieu comporte des pneumatiques présentant une largeur de bande de roulement supérieure à celles des pneumatiques d'au moins un autre essieu, de sorte que la rigidité de dérive desdits pneumatiques soit supérieure à celles des autres pneumatiques.

Selon un autre mode de réalisation de l'invention, au moins un autre essieu comporte des pneumatiques de dimensions géométriques différentes de celles des pneumatiques d'au moins un autre essieu, notamment associés à des jantes de roues de diamètres inférieures à celui des jantes d'au moins un autre essieu.

Selon l'un quelconque de ces modes de réalisations, au moins un essieu comporte plus de pneumatiques qu'au moins un autre essieu.

Selon l'un quelconque de ces modes de réalisations, chaque essieu porte au moins 10% de la charge du véhicule et, en roulage, ledit au moins un essieu dont les pneumatiques présentent une rigidité de dérive supérieure à celle des pneumatiques d'un autre essieu porte une charge différente de celles portées par les autres essieux.

Selon un mode de réalisation préférée de l'invention, au moins un essieu dont les pneumatiques présentent une rigidité de dérive supérieure à celle des pneumatiques d'un autre essieu porte une charge supérieure d'au moins 15% à celle portée par un autre essieu.

Les inventeurs ont su mettre en évidence, notamment dans le cas des remorques comportant trois essieux, qu'une répartition de la charge différente sur les essieux permet de contribuer à homogénéiser la vitesse d'usure des pneumatiques lors du franchissement de rond points ou bien lors de manoeuvres. Plus précisément, la vitesse d'usure des pneumatiques équipant les essieux avant et arrière est diminuée.

De plus en plus de véhicules et, notamment les remorques comportant trois essieux, sont aujourd'hui équipés de suspension du type à pot de suspension à air. Actuellement, les pots de suspension sont tous à la même pression. Une modification du dispositif de gestion de la pression des pots à air, à la portée de l'homme du métier, par exemple à l'aide d'électrovannes, peut permettre de conférer des pressions différentes d'un pot à l'autre et donc d'un essieu à l'autre. Une telle modification de la pression des pots de suspension à air permet d'atteindre une répartition de la charge différente entre au moins deux essieux.

Selon un premier mode de réalisation envisageable de l'invention, la gestion de la pression dans les différents pots de suspension à air peut être réalisée immédiatement après le chargement du véhicule et conservée pendant le roulage de celui-ci. Ce mode de réalisation est plus particulièrement adapté au cas des véhicules qui circulent avec des charges inférieures à leur capacité de charge maximum. En effet, la perte en termes de comportement des pneumatiques équipant les essieux dont la charge est allégée n'a pas de conséquence dans la mesure où le véhicule présente une charge inférieure à sa capacité de charge maximum.

Les inventeurs ont également mis en évidence, que dans la majorité des cas, les véhicules ne sont pas utilisés à leur charge maximum et qu'en conséquence, ce premier mode de réalisation est satisfaisant dans de nombreux cas.

Ce mode de réalisation est, comme énoncé précédemment particulièrement bien adapté au cas de véhicules comportant un essieu avec plus de roues et à même de porter une charge plus importante ou bien également dans le cas d'un essieu comportant des pneumatiques avec une bande de roulement de largeur plus importante, pouvant aussi généralement porter une charge plus importante.

Selon un deuxième mode de réalisation envisageable de l'invention, cette gestion de la pression dans les pots de suspension à air est faite en temps réel de façon à ne pas pénaliser les roulages en ligne droite et assurer des charges différentes entre au moins deux essieux uniquement dans des passages en courbe correspondant à des rond points ou bien des phases de manoeuvre.

Pour effectuer une telle gestion en temps réel, il est possible de prévoir une commande manuel pilotée par le conducteur qui va permettre de passer d'un état dans lequel les pressions sont identiques pour tous les pots de suspension, ledit état étant adapter au roulage sur route ou autoroute, à un autre état dans lequel les pressions sont différentes pour au moins deux pots de suspension à air.

Une autre méthode pour effectuer cette gestion en temps réel peut se faire à l'aide d'un microprocesseur à partir de données mesurées sur le véhicule. Il est par exemple possible d'utiliser des données accessibles par les systèmes de freinage avec antiblocage associés à chacune des roues. En effet, ces systèmes permettent de connaître précisément la vitesse de rotation de chacune des roues et donc d'en déduire d'une part la vitesse du véhicule par une moyenne des différentes vitesses et d'autre part le rayon de rotation suivi, s'il existe, par des différences entre les vitesses des roues d'un même essieu.

Il est encore possible d'obtenir des répartitions de charges différentes entre au moins deux essieux en prévoyant des pots de suspension à air de dimensions différentes sur au moins un essieu. Selon de telles réalisations, les répartitions de charges différentes sont conservées pendant le roulage.

Selon une première variante de réalisation de l'invention, ledit véhicule comportant trois essieux, au moins deux essieux portent des charges identiques. Avantageusement selon l'invention, la charge portée par l'essieu intermédiaire est différente de celle des autres essieux pour limiter au mieux les phénomènes de ripage des pneumatiques équipant les autres essieux.

Selon d'autres variantes de réalisation envisageables de l'invention, ledit véhicule comportant trois essieux, chaque essieu porte une charge différente. Selon ce type de variante de réalisation, le choix de répartition sera fait en fonction des différents paramètres du véhicule tels que la taille, l'espacement entre les essieux, la charge transportée,...

Selon l'une ou l'autre de ces variantes envisageables de réalisation de l'invention, lorsque la rigidité de dérive des pneumatiques équipant l'essieu intermédiaire est supérieure à celles des pneumatiques équipant les autres essieux, la charge portée par l'essieu intermédiaire est avantageusement supérieure à celles des autres essieux. L'essieu intermédiaire porte avantageusement une charge supérieure à celles des deux autres essieux de façon à limiter au mieux les phénomènes de ripage des pneumatiques équipant ces deux essieux avant et arrière soit lors de passage de rond points soit lors de manoeuvres.

Selon une réalisation envisageable de l'invention, la charge portée par l'essieu intermédiaire est comprise entre 35 et 70% de la charge du véhicule.

De préférence également, la charge portée par l'essieu avant et/ou l'essieu arrière est comprise entre 10 et 33% de la charge du véhicule.

L'allégement de la charge portée par les pneumatiques de l'essieu avant permet en outre de limiter l'endommagement de ces pneumatiques lors de chocs par exemple sur des bordures de trottoirs. En effet, ce sont les pneumatiques de l'essieu avant qui viennent éventuellement au contact desdites bordures de trottoirs lors de manoeuvre et passages de ronds points.

Les inventeurs ont encore su mettre en évidence que le véhicule selon l'invention peut être mis en oeuvre sans modifier les capacités de charge des pneumatiques habituellement utilisées.

En effet, actuellement, les pneumatiques majoritairement utilisés sur des remorques comportant trois essieux sont du type 385/65R22.5. De tels pneumatiques présentent une capacité de charge de 4.5 tonnes, selon les définitions de l'ETRTO. Par ailleurs, certaines législations sur les remorques ont par exemple fixé une charge maximale de ces remorques à 24 tonnes. Il ressort de ces chiffres que même lorsque la remorque est à sa charge maximale, les six pneumatiques équipant les trois essieux sont en surcapacité au regard de la charge transportée. En effet, en théorie, ces six pneumatiques pourraient porter une charge de 27 tonnes.

Il est donc possible, dans de tels cas, d'appliquer des charges différentes à une telle remorque équipée de ces pneumatiques en faisant par exemple porter une charge de 4.5 tonnes à chacun des pneumatiques de l'essieu intermédiaire et une charge de 3.75 tonnes à chacun des autres pneumatiques.

Une telle répartition de charges différentes entre les essieux s'applique d'autant mieux aux cas des véhicules circulant avec des charges inférieures aux charges maximales possibles.

Lorsque l'invention est appliquée à de véhicules dont chacun des essieux est équipés de dispositifs de freinage avec système antiblocage sur chacun des essieux, le freinage peut être assurer efficacement.

Il existe encore des véhicules comportant un seul système antiblocage pilotant l'ensemble des dispositifs de freinage des différents essieux. Pour ce type de véhicule, il est nécessaire de prévoir un asservissement des actions liées au système antiblocage en fonction de la charge portée par chacun des essieux. Il est par exemple à la portée de l'homme du métier de lier ces actions à la pression des pots de suspension à air.

D'autres détails et caractéristiques avantageux de l'invention ressortiront ci-après de la description d'un exemple de réalisation de l'invention en référence aux figures qui représentent :

- figure 1, un schéma d'un véhicule comportant une remorque avec trois essieux,

- figure 2, une représentation schématique vue du dessus d'un véhicule selon un premier mode de réalisation de l'invention,

- figure 3, une représentation schématique vue du dessus d'un véhicule selon un deuxième mode de réalisation différent de l'invention.

Les figures ne sont pas représentées à l'échelle pour en simplifier la compréhension.

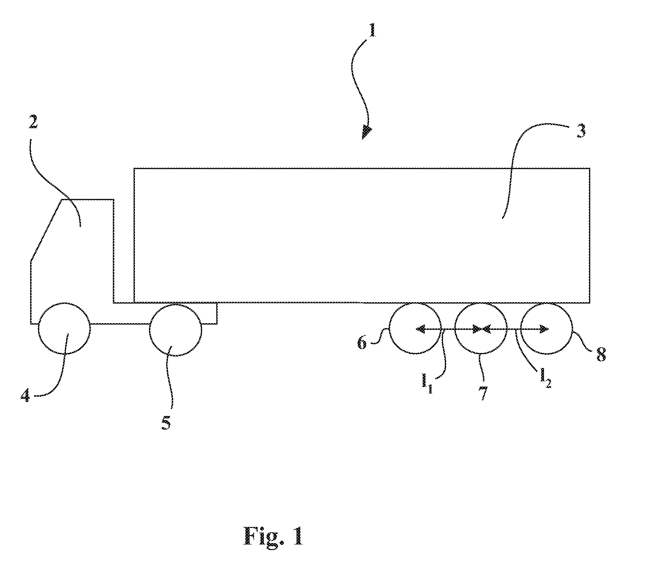

Sur la figure 1, est représenté de manière schématique un véhicule 1 constitué d'une part d'un tracteur 2 et d'une remorque 3.

Le tracteur 2 comporte un premier essieu 4 directeur et un deuxième essieu moteur 5. La remorque 3 comporte trois essieux porteur 6, 7, 8. Ces trois essieux 6, 7, 8 ne sont ni directionnels ni moteurs. Les espacements ou empattements 11 et 12 entre les trois essieux 6, 7, 8 sont égaux à 1,3 mètre.

La masse globale du véhicule 1 en charge est égale au maximum à 40 tonnes, ce qui correspond à une charge transportée maximum de 24 tonnes.

La répartition des masses sur les différents essieux lorsque le véhicule 1 est à sa charge maximale, celle-ci étant répartie de manière homogène dans la remorque 3 se répartit comme suit :
- essieu 4 : 6,6 tonnes
- essieu 5 : 11,8 tonnes
- essieux 6, 7 et 8 : 21,6 tonnes.

Conformément à l'invention, les pneumatiques de l'essieu intermédiaire 7 présentent une rigidité de dérive supérieure à celles des pneumatiques équipant les essieux 6 et 8. Comme énoncé précédemment cette rigidité de dérive supérieure peut être obtenue par une architecture et notamment une armature de sommet différente, les dimensions extérieures des pneumatiques étant les mêmes.

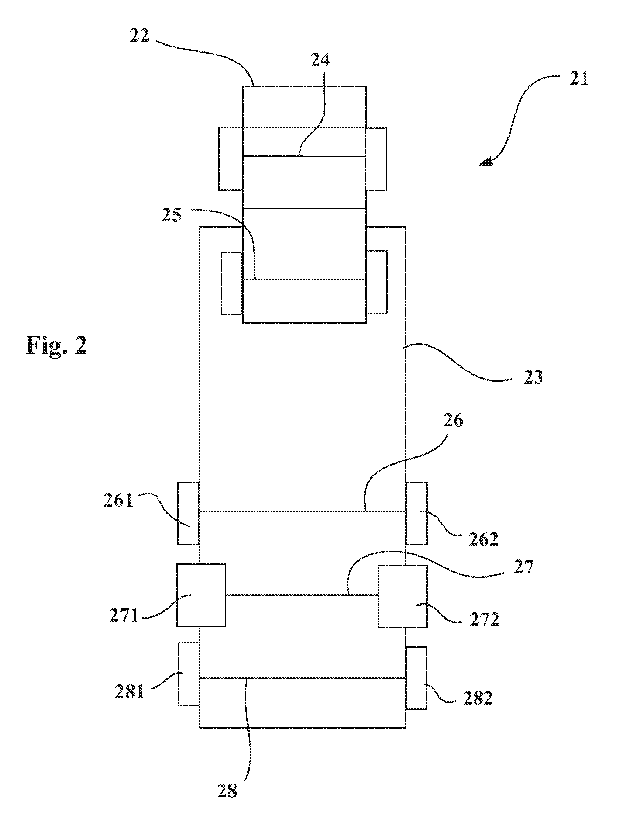

La figure 2 illustre schématiquement une variante de réalisation de l'invention sur laquelle le véhicule 21 est vu du dessus en semi-transparence pour observer l'ensemble des pneumatiques et essieux du tracteur 22 et de la remorque 23. Selon cette variante de réalisation de l'invention, l'ensemble des pneumatiques 261, 262, 281, 282 équipant les essieux 26 et 28 de la remorque 23 sont identiques et de type 385/65R22.5. L'essieu intermédiaire 27 comporte des pneumatiques 271, 272 possédant une bande roulement beaucoup plus large et sont du type 495/45R22.5. Ces pneumatiques 271, 272 à bande de roulement élargie confèrent une rigidité de dérive des pneumatiques de l'essieu intermédiaire 27 supérieure à celles des pneumatiques261, 262, 281, 282 des deux autres essieux 26 et 28.

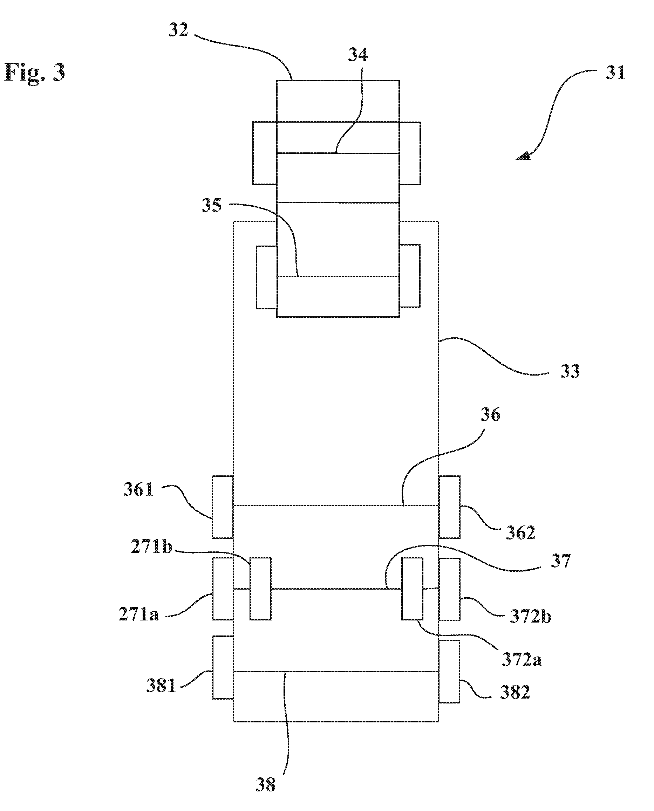

La figure 3 illustre schématiquement une variante de réalisation différente l'invention sur laquelle le véhicule 31 est vu du dessus en semi-transparence pour observer l'ensemble des pneumatiques et essieux du tracteur 32 et de la remorque 33. Selon cette variante de réalisation, l'ensemble des pneumatiques équipant les essieux 36, 37, 38 de la remorque 33 du véhicule 31 sont identiques et l'essieu intermédiaire 37 comporte deux paires de roues jumelées. Ces roues jumelées confèrent ainsi une rigidité de dérive des pneumatiques 371a, 371b, 372a, 372b de l'essieu intermédiaire 37 supérieure à celles des pneumatiques 361, 362, 381, 382 des deux autres essieux 26 et 28.

Selon ces deux variantes illustrées sur les figures 2 et 3, la capacité de charge de l'essieu intermédiaire 27, 37 est de fait supérieure à la capacité de charge des autres essieux 26, 28 ; 36, 38 de la remorque 23, 33. il est ainsi possible d'associer des dérives différentes par essieu à des charges portées également différentes par essieu et notamment une charge supérieure portée par l'essieu intermédiaire 27, 37.

Pour obtenir des charges différentes sur les essieux, comme expliqué précédemment, il est possible de prévoir que chacun des essieux 26, 27, 28 ; 36, 37, 38 est associé à une suspension, non représentée sur la figure, du type à pot de suspension à air dont la pression peut être ajustée pour chacun des essieux.

Le véhicule 21, 31 est encore équipé d'un système permettant de modifier la pression de chacun des pots de suspension à air. Cette régulation des pressions est, par exemple, réalisée à l'aide d'électrovannes associées à chacun des circuits d'air des différents essieux 26, 27, 28; 36, 37, 38.

La charge plus importante sur l'essieu 27, 37 contribue également à limiter l'usure des pneumatiques des essieux 26, 36 et 28, 38 lorsqu'ils sont amenés à riper sur le sol lorsque le véhicule 21, 31 tourne autour de ronds points ou lors de manoeuvres.

Des essais ont ainsi été réalisés avec le véhicule 1, celui-ci transportant une charge de 24 tonnes, portée comme expliquée précédemment pour 21.6 tonnes sur les trois essieux de la remorque.

Les essais ont été réalisés d'une part avec un véhicule de référence comportant des pneumatiques identiques sur l'ensemble des essieux de la remorque et d'autre part avec des véhicules selon l'invention dont les pneumatiques équipant l'essieu intermédiaire présente des rigidités de dérive supérieures à celles des autres pneumatiques des deux autres essieux du fait d'une architecture sommet différente. Différents pneumatiques ont été conçus pour voir l'influence des différences de rigidité de dérive entre les différents pneumatiques. Les essais ont ainsi été réalisés d'une part avec des pneumatiques équipant l'essieu intermédiaire avec une rigidité de dérive supérieure à 1.2 fois celle des pneumatiques des deux autres essieux (Essai A) et d'autre part avec des pneumatiques équipant l'essieu intermédiaire avec une rigidité de dérive supérieure à 1.5 fois celle des pneumatiques des deux autres essieux (Essai B), la rigidité de dérive globale de l'ensemble des pneumatiques des trois essieux étant identique à celle des pneumatiques du véhicule de référence. Dans tous les cas, la nature des matériaux constituant les bandes de roulement est la même.

Des premiers essais, permettant de simuler l'usure due à des roulages en zone urbaine comportant des rond points, ont été réalisés sur une piste imposant des rayons de rotation allant de 30 à 240 mètres, avec un écart-type de courbure de 0.0087 m⁻¹, avec des vitesses allant de 20 à 50 km/h, telles que l'écart-type d'accélération transversale soit de 0. 47 m/s².

L'essai consiste à faire rouler le véhicule pendant une durée de 250 heures et de caractériser l'usure absolue par une mesure en gramme de matière du pneumatique perdu pour 100 Km de chacun des pneumatiques équipant les trois essieux de la remorque et une moyenne de ces usures étant établie entre les deux pneumatiques équipant un même essieu.

Les résultats sont inscrits dans le tableau ci-dessous et exprimés en Gramme pour 100 Km :

| | | Essieu 1 | Essieu 2 | Essieu 3 |
|---|---|---|---|---|
| Véhicule de référence (g/100Km) | | 12.4 | 2.95 | 43.7 |
| Véhicule selon l'invention | Essai A (g/100Km) | 11.2 | 3.50 | 41.0 |
| | Essai B (g/100Km) | 9.8 | 4.25 | 37.4 |

Des seconds essais, permettant de simuler l'usure due à des roulages comportant en outre des manoeuvres, ont été réalisés sur une piste imposant des rayons de rotation allant de 16 à 240 mètres, avec un écart-type de courbure de 0.0097 m⁻¹, avec des vitesses allant de 5 à 50 km/h, telles que l'écart-type d'accélération transversale soit de 0.47 m/s².

L'essai consiste à faire rouler le véhicule pendant une durée de 250 heures et de caractériser l'usure absolue par une mesure en gramme de matière du pneumatique perdu pour 100 Km de chacun des pneumatiques équipant les trois essieux de la remorque et une moyenne de ces usures étant établie entre les deux pneumatiques équipant un même essieu.

Les résultats sont inscrits dans le tableau ci-dessous et exprimés en Gramme pour 100 Km :

| | | Essieu 1 | Essieu 2 | Essieu 3 |
|---|---|---|---|---|
| Véhicule de référence (g/100Km) | | 20.9 | 2.97 | 49.2 |
| Véhicule selon l'invention | Essai A (g/100Km) | 19.2 | 3.49 | 46.3 |
| | Essai B (g/100Km) | 17.0 | 4.22 | 42.5 |

Dans les deux cas, les résultats obtenus montrent que le véhicule selon l'invention permet de diminuer l'usure des pneumatiques équipant les essieux avant et arrière de la remorque. Le deuxième essai met en outre en évidence que l'usure due au ripage lors des manoeuvres est également améliorée.

Un troisième type d'essais a été réalisé en faisant rouler deux véhicules identiques et l'un d'eux étant conforme au véhicule 1 selon l'invention sur des parcours identiques et représentatifs d'un type d'usage classique pour des camions transportant des marchandises. L'essai a consisté à déterminer la durée de vie des pneumatiques sur chacun des essieux, celle-ci étant exprimée en kilomètres parcourus avant usure totale (indiquée par les indicateurs d'usure).

Les résultats sont inscrits dans le tableau ci-dessous :

| | | Essieu 1 | Essieu 2 | Essieu 3 |
|---|---|---|---|---|
| Véhicule de référence | | 267 000 Km | 455 000 Km | 92 000 Km |
| Véhicule selon l'invention | Essai A | 283 000 Km | 392 000 Km | 99 000 Km |
| | Essai B | 309 000 km | 331 000 Km | 109 000 Km |

S'il apparaît que des gains sont obtenus uniquement sur les deux essieux 1 et 3 qui sont soumis au phénomène de ripage, la moins bonne performance des pneumatiques équipant l'essieu 2 est de moindre importance au vu des kilométrages parcourus par ces pneumatiques. En outre, l'usage conduit à effectuer des permutations des pneumatiques de cet essieu pour les mettre sur les autres essieux afin d'homogénéiser les usures.

Des derniers essais ont été réalisés en combinant des rigidités de dérive différentes et des charges portées par essieu différentes.

Les mêmes essais que précédemment ont été reproduits avec d'une part le même véhicule de référence et d'autre part le véhicule selon l'invention équipé de pneumatiques conformes aux essais A et B, lequel est en outre modifié pour présenter des charges différentes sur les différents essieux. Pour cela, les pressions d'air dans chacun des pots à air de suspension de la remorque sont régulées de sorte que l'essieu 7 porte une charge de 9 tonnes et les essieux 6 et 8 portent chacun une charge égale à 6.3 tonnes.

Les résultats sont inscrits dans les tableaux ci-dessous ; le premier tableau correspond aux essais permettant de simuler l'usure due à des roulages en zone urbaine, le deuxième tableau correspond aux essais de permettant de simuler l'usure due à des roulages comportant en outre des manoeuvres et le troisième tableau correspond au essais permettant de déterminer la durée de vie des pneumatiques sur chacun des essieux.

| | | Essieu 1 | Essieu 2 | Essieu 3 |
|---|---|---|---|---|
| Véhicule de référence (g/100Km) | | 12.4 | 2.95 | 43.7 |
| Véhicule selon l'invention | Essai A (g/100Km) | 9.5 | 4.31 | 37.3 |
| | Essai B (g/100Km) | 8.3 | 5.00 | 33.6 |

| | | Essieu 1 | Essieu 2 | Essieu 3 |
|---|---|---|---|---|
| Véhicule de référence (g/100Km) | | 20.9 | 2.97 | 49.2 |
| Véhicule selon l'invention | Essai A (g/100Km) | 16.2 | 4.27 | 42.2 |
| | Essai B (g/100Km) | 14.5 | 4.95 | 38.3 |

| | | Essieu 1 | Essieu 2 | Essieu 3 |
|---|---|---|---|---|
| Véhicule de référence | | 267 000 Km | 455 000 Km | 92 000 Km |
| Véhicule selon l'invention | Essai A | 330 000 Km | 325 000 Km | 112 000 Km |
| | Essai B | 365 000 km | 288 000 Km | 126 000 Km |

Ces résultats mettent en évidence l'effet bénéfique de la combinaison d'un essieu équipé de pneumatiques présentant une rigidité de dérive supérieure à la rigidité de dérive des pneumatiques des autres essieux avec une charge portée par ledit essieu supérieure à la charge que portent les autres essieux.

L'Essai A met en évidence qu'il a été possible d'atteindre des kilométrages identiques pour les pneumatiques des essieux 1 et 2 et donc de limiter les permutations usuelles pour ce type de véhicules telles que décrites précédemment.

La combinaison de l'invention avec un choix de matériaux constituant la bande de roulement différent pour les pneumatiques de l'essieu 3 pourrait permettre d'équilibrer les kilométrages parcourus entre les trois essieux. Un tel changement de matériaux est tout à fait envisageable dès lors qu'il ne porte que sur l'essieu 3 sans risque de perturber le comportement du véhicule en roulage.

L'invention a essentiellement été décrite en référence à des remorques comportant trois essieux faisant partie de véhicules à cinq essieux.

L'invention s'applique encore à des véhicules combinant sur les mêmes essieux une répartition de la charge par essieu selon l'invention avec des essieux pouvant éventuellement être relevés lorsque la charge transportée est nulle.

## Revendications

1. Véhicule comportant trois essieux non directionnels équipés d'au moins deux pneumatiques dont les axes de rotation sont en permanence parallèles entre eux d'un essieu à l'autre, au moins à l'état neuf, les pneumatiques d'au moins un essieu présentant une rigidité de dérive supérieure à celle des pneumatiques des deux autres essieux **caractérisé en ce que** les dimensions des pneumatiques sont identiques sur tous les essieux et **en ce que** les pneumatiques desdits deux autres essieux présentent une architecture différente de celle des pneumatiques dudit essieu qui est celui intermédiaire et qui présente une rigidité de dérive supérieure à celle des pneumatiques des deux autres essieux.

2. Véhicule comportant trois essieux non directionnels équipés d'au moins deux pneumatiques dont les axes de rotation sont en permanence parallèles entre eux d'un essieu à l'autre, au moins à l'état neuf, les pneumatiques d'au moins un essieu présentant une rigidité de dérive supérieure à celle des pneumatiques des deux autres essieux **caractérisé en ce que** les pneumatiques desdits deux autres essieux présentent une largeur de bande de roulement différente de celle des pneumatiques dudit essieu qui est celui intermédiaire et qui présente une rigidité de dérive supérieure à celle des pneumatiques des deux autres essieux.

3. Véhicule selon la revendication 3, **caractérisé en ce que** la rigidité de dérive des pneumatiques équipant l'essieu intermédiaire est supérieure d'au moins 10 % à celles des pneumatiques équipant les autres dits essieux.

4. Véhicule selon l'une des revendications précédentes, **caractérisé en ce qu'**au moins un des dits essieux comporte plus de pneumatiques qu'au moins un autre des dits essieux.

## Patentansprüche

1. Fahrzeug mit drei nicht lenkenden Achsen, die mit mindestens zwei Reifen ausgestattet sind, deren Drehachsen durchweg von einer Achse zur anderen zueinander parallel sind, zumindest im Neuzustand, wobei die Reifen mindestens einer Achse eine Schräglaufsteifigkeit aufweisen, die höher als die der Reifen der beiden anderen Achsen ist, **dadurch gekennzeichnet, dass** die Abmessungen der Reifen bei allen Achsen identisch sind und dass die Reifen der beiden anderen Achsen eine Architektur aufweisen, die von der der Reifen der Achse, bei der es sich um die mittlere Achse handelt und die eine Schräglaufsteifigkeit aufweist, die höher als die der Reifen der beiden anderen Achsen ist, verschieden ist.

2. Fahrzeug mit drei nicht lenkenden Achsen, die mit mindestens zwei Reifen ausgestattet sind, deren Drehachsen durchweg von einer Achse zur anderen zueinander parallel sind, zumindest im Neuzustand, wobei die Reifen mindestens einer Achse eine Schräglaufsteifigkeit aufweisen, die höher als die der Reifen der beiden anderen Achsen ist, **dadurch gekennzeichnet, dass** die Reifen der beiden anderen Achsen eine Laufflächenbreite aufweisen, die von der der Reifen der Achse, bei der es sich um die mittlere Achse handelt und die eine Schräglaufsteifigkeit aufweist, die höher als die der Reifen der beiden anderen Achsen ist, verschieden ist.

3. Fahrzeug nach Anspruch 2, **dadurch gekennzeichnet, dass** die Schräglaufsteifigkeit der Reifen, mit denen die mittlere Achse ausgestattet ist, um mindestens 10 % höher als die der Reifen, mit denen die anderen Achsen ausgestattet sind, ist.

4. Fahrzeug nach einem der vorhergehenden Ansprüche, **dadurch gekennzeichnet, dass** mindestens eine der Achsen mehr Reifen als mindestens eine andere der Achsen umfasst.

## Claims

1. Vehicle comprising three axles, none of them being a steered axle, fitted with at least two tyres the axis of rotation of which are always mutually parallel from one axle to another, at least at the new state, the tyres of at least one axle having a cornering stiffness greater than that of the tyres of the other two axles **characterized in that** the dimensions of the tyres are the same across all the axles and **in that** the tyres of the said other two axles have a different architecture than that of the tyres of the said axle which is the intermediate axle and which have a cornering stiffness greater than those of the tyres fitted to the other two axles.

2. Vehicle comprising three axles, none of them being a steered axle, fitted with at least two tyres the axis of rotation of which are always mutually parallel from one axle to another, at least at the new state, the tyres of at least one axle having a cornering stiffness greater than that of the tyres of the other two axles **characterized in that** the tyres of the said other two axles have a tread strip width different than those of the tyres of the said axle which is the intermediate axle and which have a cornering stiffness greater than those of the tyres fitted to the other two axles.

3. Vehicle according to Claim 2, **characterized in that** the cornering stiffness of the tyres fitted to the intermediate axle is at least 10% greater than those of the tyres fitted to the other axles.

4. Vehicle according to one of the preceding claims, **characterized in that** at least one axle comprises more tyres than at least one other axle.
